# EUROPEAN PATENT SPECIFICATION

(11) **EP 1 509 720 B1**
(45) Date of publication and mention of the grant of the patent: **04.04.2007**
(21) Application number: 03727252.3
(22) Date of filing: 04.06.2003
(51) Int. Cl.: F16L 59/12, F16L 7/00

(54) **SPACER ELEMENT AND A METHOD FOR MAKING INSULATED PIPES.**
ABSTANDSELEMENT UND VERFAHREN ZUR HERSTELLUNG ISOLIERTER ROHRE
ELEMENT D'ESPACEMENT

(30) Priority: 06.06.2002 DK 200200856
(43) Date of publication of application: 02.03.2005
(73) Proprietor: ALSTOM Power FlowSystems A/S, 7000 Fredericia (DK)
(72) Inventor: JESPERSEN, John, Ellermann, DK-7000 Fredericia (DK)
(74) Representative: Tellefsen, Jens J.
(86) International application number: PCT/DK2003/000365
(87) International publication number: WO 2003/104709

(56) References cited:
- EP-A1- 0 046 617
- GB-A- 1 083 185
- US-A- 3 540 487
- US-A- 4 240 850
- US-A- 4 351 365
- US-B1- 6 349 748

## Description

The present invention concerns a spacer element for use in foaming insulation material in pipelines and a method for producing insulated pipes and a pipe made by using the spacer elements of the invention and by a method according to the invention.

For a long time it has been prior art to make insulated pipes for use in e.g. supplying hot water from district heating plants to consumers in their own homes. In order to reduce the heat loss, the heating pipes are typically made up of an inner medium pipe, e.g. made of plastic or steel. At the outer side of the medium pipe there is arranged a layer of insulation material, e.g. in the shape of polyurethane foam or similar suitable foam material, and outermost the insulation material is protected by a jacket, e.g. made of polyethylene or other suitable material.

A pipe of the above type is shown in EP-A-46 617, where around a medium pipe there is arranged a spacer element serving to keep the external jacket at a certain fixed distance from the medium pipe, after which e.g. polyurethane foam is supplied and foams in the interspace between the medium pipe and the surrounding jacket. Hereby is made district heating pipes with relatively good insulation ability.

In connection with the present invention, the starting point is district heating pipes, but the invention may, with just as great effect, find application on all types of insulated pipes where a foamable material is placed between a central pipe and a jacket. However, in that connection it is to be noted that the effect of the invention will be the greatest by using fast foaming systems.

In the process of producing this type of pipe, the medium pipe and a possible jacket are arranged concentrically, possibly by using spacer means as illustrated in EP-A-46 617. When the foam is then provided, this occurs by the foam in liquid form is laid out by inserting a lance which is withdrawn simultaneously with a well-defined amount of liquid being injected into the pipe. The liquid may then develop into foam, e.g. by reaction with the air, internal chemical reaction, chemical reaction caused by pressure changes, or by other prior art method.

Alternatively, the foam material in liquid form is supplied concurrently with the jacket being placed around the medium pipe via a so-called pouring tube.

A third method for making insulated pipes is by spraying the foam material on the medium pipe, after which the jacket is arranged around medium pipe and foam layer. By this production process, spacer means are rarely used for keeping fixed spacing between medium pipe and jacket. This may provide a not quite uniform degree of insulation.

When the foaming characteristics are known, it is possible to calculate in advance how great amount of foam material which is to be provided, either by means of the lance or by means of the pouring tube, per meter pipe produced. As the liquid is placed in the pipe, the foaming process will commence, why a zone will appear in the concentric interspace between medium pipe and jacket, where at the beginning of the zone there is foam material in liquid form and at the end of the zone the finished foam structure is formed. Between these two end points there will be a number of transition stages where the foam material will be more or less foamed.

This more or less developed zone will be a kind of inclined front advancing through the pipe with largely constant speed.

Foam materials like PUR and PIR foam are characterised by the ability of being supplied in fluid form, after which they may be brought to foam by reaction. The appearance of the above mentioned boundaries in the zone depends on the material parameters of the foam. A commonly used foam material will have a so-called cream time of about 30 s. The cream time is the period of time from mixing the liquids to initiation of foam cell formation, i.e. the time from which the liquid may be regarded as fluid until beginning of setting. The period of time of 30 s may vary ±10 s depending on the circumstances in connection with placing the foam.

The second end of the interval depends on the so-called fibre time where the foam is beginning to solidify, i.e. where the foam material has achieved its final porous structure and has assumed more or less solid form. For a typical foam material of the above mentioned types, the fibre time will be around 110 s.

During the foaming, the viscosity of the foam material is continuously changed. As the PUR reaction is exothermic, the viscosity will only fall due to the temperature elevations in the material as a consequence of the beginning hardening in the foam material. Then the viscosity will rise as continued setting will form polymeric cross-bonds.

The foam front will, as described above, advance through the pipe depending on how fast it will be brought to foam. The front will thus be movable and in cases where the pipe production process includes spacer elements for retaining the distance between outer jacket and inner medium pipe, the foam front will thus move past the spacer elements. Depending on how advanced the setting process in the foam is, i.e. where in the interval between cream time and fibre time the foam is, the influence of the spacer elements on the finished foam structure will be greater or lesser. If a foam, which is close to the fibre time, is pressed past a spacer element, the spacer element will influence the cell building in the region about the spacer element.

Experiments have shown that on the rear side of such a spacer element there may appear large cavities with reduced insulation capability and reduced mechanical strength due to the above mentioned conditions.

In order to achieve still better insulation capability of the foam material used, advantageously there may be used foam materials with higher reactivity, so-called fast systems. In this connection, by "fast foam material" is understood a foam material where the cream time is below 15 s and the fibre time is typically reached within 60 s. When fast foam materials are used, this means that the foam front is moving substantially faster within the pipe, why the influence of the spacer elements on the finished insulation by possible formation of cavities at the rear side of the spacer elements becomes worse.

It is thus the purpose of the present invention to provide a spacer element where the influence on the insulation material by passing the spacer elements becomes minimised.

This is done according to the invention with a spacer element which is peculiar in that the spacer element has one or more wings, that the length of each wing corresponds to the distance between pipe and jacket, that each wing has streamlined cross-section in parallel with the longitudinal axis of the medium pipe, and that the wings in the mounted condition are arranged largely perpendicular to the longitudinal axis of the medium pipe.

In a further, preferred embodiment, each wing has a cross-section which is lens-shaped, oval or prism-shaped.

By these cross-sectional shapes of the spacer element is achieved that almost no cavities are formed after the spacer element. Seemingly, the gradual transition from the pointed end of the profile over the thick centre part of the spacer element succeeded by a tapering end has the influence on the foam material that the foam cells that may have been formed and have achieved a greater stiffness due to advanced reaction in the foam are compressed when encountering the spacer element, but are not deformed in such a way that they permanently maintain their deformation, will have a tendency of returning to the original shape and thereby fill the cavity which the spacer element may tend to leave behind. In this way, the formation of cavities after the spacer element is avoided.

In a further, preferred embodiment, the spacer element is rounded at one side and tapering at another side of the cross-section. This, more streamlined design of the spacer element provides that the foam structure of the spacer element becomes still more homogenous with associated improved insulation ability.

In a further preferred embodiment, a plurality of spacer elements is arranged radially out from a member which can be arranged round the medium pipe. As the making of insulated pipes of the above mentioned type often occurs by great lengths and in large numbers, it may be advantageous to have a number of spacer elements pre-mounted on a member. The member may e.g. be made of a flexible material, e.g. the same material as the spacer elements, so that the member has an inner diameter largely corresponding to the outer diameter of the medium pipe. By also slitting the member so that the member can be expanded around the pipe and thereby adapted over the pipe, it becomes relatively simple to mount spacer elements on the pipes.

In a further, preferred embodiment, the spacer elements may be used in a method for making insulated pipes, where the spacer elements are arranged around a medium pipe with suitable interspaces, both radially around the pipe and in the longitudinal direction of the pipe. Then a jacket is arranged coaxially around the outer side of the spacer elements, after which the liquid foam material is supplied within the jacket and is brought to foam.

By using prior art for making insulated pipes of this type, but with the new spacer elements according to the invention, is achieved that the quality of the insulated pipes is considerably improved, as well as it becomes possible to use fast foam materials, i.e. foam materials with cream time below 15 s and fibre times below 60 s.

In one type of production process, the pipes are produced in single pieces of 12, 16 and up to 18 m at a time.

In order to use fast foam types together with spacer elements with designs provided with the present invention, longer pipes may be foams in the same time as well as the quality is considerably improved. Furthermore, the method is foam saving as it is possible to use less foam. By foaming processes it is typically necessary to use an excess amount of foam, as the foaming causes building up of a certain pressure pressing the foam front forward. The pressure is also utilised for forming a uniform and homogenous pore structure within the foam. By using a faster foam together with spacer elements according to the invention, a lesser amount of foam is used as the fast foam types are producing a more uniform porous structure as well as the fast foaming implies that the front is moving very fast through the pipe, whereby a homogenous foaming is achieved with less foam material.

The cross-section of the spacer element is determined partly by the condition that sufficient material is to be present in order to secure the jacket in position in relation to the concentrically arranged medium pipe. Where a medium pipe with about 60 mm diameter is used, the spacer element will be about 3.5 - 4 mm thick. By using the spacer element according to the invention it appears that the thickness compared with length of the spacer element is optimal about at 1:7. Since pure compression largely occurs in the spacer element due to the action from the jacket, it is thus important that the cross-sectional area is dimensioned so that the pressure can be absorbed.

The fast foam types may have about 15% better insulation capability, which together with improved quality of the porous structure around the spacer elements provide that pipes made by means of spacer elements according to the present invention attain substantially improved insulation characteristics with lesser amounts of foam.

The invention will now be explained with reference to the accompanying drawing, wherein:
Fig. 1 shows a schematic outline of foaming by using a foam lance,
Fig. 2 shows a cross-section with rectangular spacer element,
Fig. 3 shows a cross-section with spacer element according to the invention,
Fig. 4 shows a preferred cross-sectional shape,
Fig. 5 shows a preferred cross-sectional shape,
Fig. 6 shows a preferred cross-sectional shape, and
Fig. 7 shows a member with several radially arranged spacer elements.

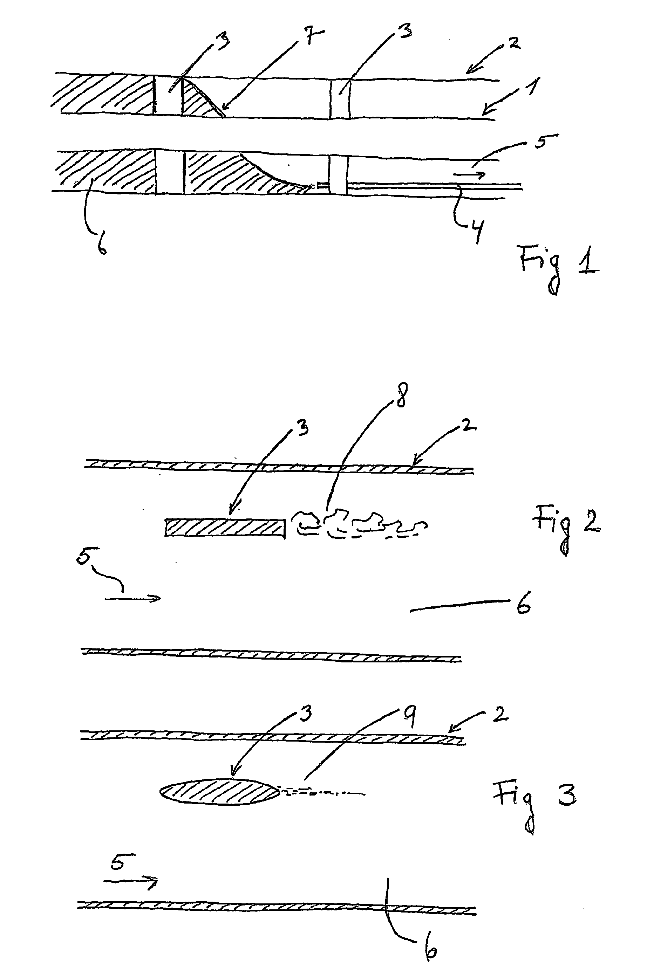

In Fig. 1 is illustrated a method for making insulated pipes, which is also applicable in connection with the present invention. A medium pipe 1 is concentrically arranged within a jacket 2 so that the distance between the jacket 2 and the medium pipe 1 is held approximately constant by means of spacer elements 3. Then is inserted a lance 4 from one end of the pipe and approximately to the opposite end. The lance is subsequently withdrawn from the pipe in direction of the arrow 5. Simultaneously with the withdrawal, a foam material is supplied in fluid form. When the foam is disposed at the bottom of the jacket, it will begin foaming due to its thermosetting properties. By 6 is illustrated a zone of foam material which is fully foamed. In the transition zone between full foam and the discharge opening of the lance, a so-called foam front 7 is located. The foam front will move in the same direction as the withdrawal direction 5 of the lance, why the foam front will pass the spacer elements 3.

In connection with setting of the foam, the setting process of a foam is indicated by two characteristic values, namely the cream time of the foam and the fibre time of the foam. By cream time of the foam is denoted the period in which the foam material may be regarded as being fluid. Concerning cream time, this denotes a beginning cell/pore formation in the foam.

For traditional production of district heating pipes, the so-called normal foams belong to PUR or PIR type foam materials having a cream time of about 30 s ± 10 s. Then the foam material will begin the cell/pore development whereby the material will rise, and the foam front 7 will be pressed in the direction 5. When the foam begins to achieve a firm structure, the fibre time has been reached. For the above foam materials, the fibre time is about 110 s.

By using so-called fast foam materials, both cream time and fibre time are reduced. This implies that the foam front 7 as well as the lance 4 are to be moved in direction 5 considerably faster than in case of the normal, slow foam materials.

By using fast foam materials many advantages are attained, but the most important advantage is a better insulation ability, as fast foam materials form more but lesser and more evenly distributed cells/pores, why a higher insulation value is achieved, in some embodiments up to 15% better insulation.

When the foam material is passing the spacer elements 3, i.e. when the front 7 passes the spacer elements 3, the foam structure will be physically influenced by the spacer elements 3. Depending on the condition of the foam material, i.e. which degree of setting between cream time and fibre time the foam front 7 is in at the passage of the spacer elements 3, the passage will cause defects in the finished foam in the form of cavities and inhomogeneous zones.

This phenomenon with inhomogeneous zones is illustrated in Fig. 2. In the shown schematic drawing is depicted a section in parallel with the longitudinal axis of the medium pipe. A spacer element 3 has been sectioned, thus presenting a rectangular cross-section of the spacer element The foam front 7 has passed the spacer element 3 in the direction 5. Hereby, inhomogenities 8 in the shape of cavities behind the spacer element 3 have appeared.

However, by using a spacer element according to the invention as illustrated in Fig. 3, where the spacer element in the sectioned condition has cross-sectional shape, which is non-rectangular and in this case lens-shaped, a very slight disturbance of the foam structure is achieved in a region with minimal inhomogenities 9 behind the spacer element 3. Thus there is a clear difference between the foam quality behind a traditional spacer element 3 as illustrated in Fig. 2 and the improved spacer element 3 according to the invention as illustrated in Fig. 3.

In Figs. 4 - 6 are illustrated different cross-sectional shapes, all providing improved foam qualities behind the spacer profile. In Fig. 4 is illustrated a drop-shaped cross-section of a spacer element. Spacer elements 3 made with a cross-section as illustrated in Fig. 4 are to be disposed so that the blunt end of the cross-section is facing against the flow direction.

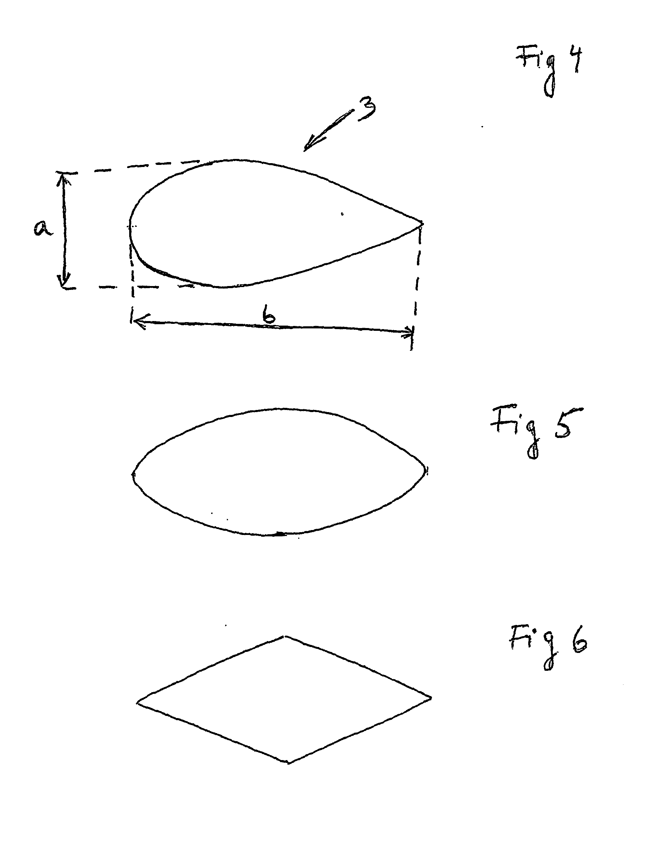

The cross-section illustrated in Fig. 5 in the shape of a lens-shape or oval may be disposed arbitrarily in relation to the direction of flow, i.e. relative to the direction of movement of the foam front, and may attain satisfactory results.

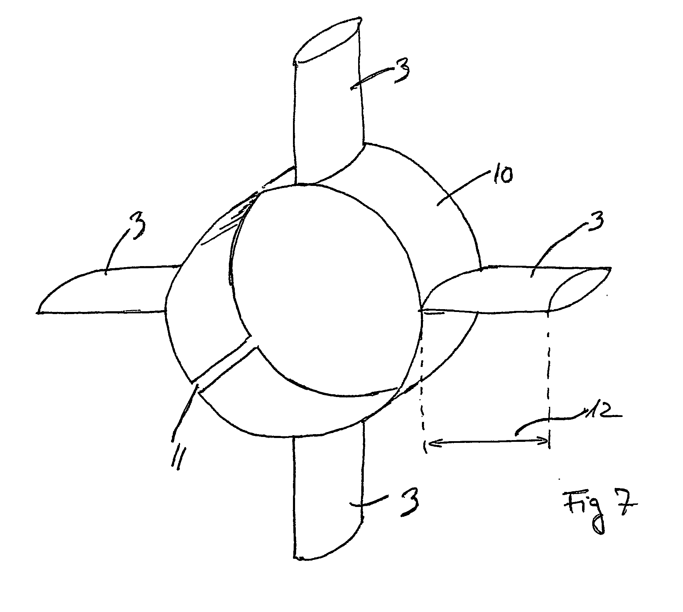

The same is the case of the cross-section illustrated in Fig. 6.

Experiments have shown that the thickness a of the cross-section of the spacer element compared with the length b, i.e. the extension of the spacer element in the direction of movement of the front, is optimal if corresponding to 1:7.

In Fig. 1, the method was explained with reference to a method where an injection lance 4 for inserting the foam material 6 in the cavity between the medium pipe 1 and the jacket 2 was used. The spacer elements are just as usable in other production processes, e.g. in processes where jacket and foam material are provided by co-extrusion around the medium pipe 1. The medium pipe will typically be prepared to this production process with spacer elements 3 so that the jacket is packed around the pipe and the foam material is filled in by means of a pouring tube, after which a jacket is extruded out on medium pipe and foam. This process is not illustrated in the Figures, but is e.g. illustrated in EP-A-46 617 with reference to Fig. 3.

In Fig. 7 is illustrated a further preferred embodiment of the invention. Four spacer elements 3 are here arranged radially on a cylindric member 10. The member 10 is cylindric so that it may be applied externally on a medium pipe 1, i.e. the inner diameter of the tube 10 corresponds to the outer diameter of the medium pipe 1. By making the cylindric tube 10 of an elastic material and cut the member 10 as illustrated by 11, four spacer elements may easily be arranged around the medium pipe by forcing the diameter on the pipe 10 to be greater, so that the opening 11 can go around the medium pipe 1. The shown spacer elements are here shown with lens-shaped cross-section, but any of the above cross-sections may be used here. The thickness of the insulation layer is determined by the length 12 of the spacer elements. In the shown example, there are provided four spacer elements 3 on the member, but an arbitrary number from 1 to 20, depending on the diameter of the medium pipe or other parameters, may be used without departing from the character of the invention.

## Claims

1. Spacer element for use in foaming insulation material in pipelines, where the spacer element is disposed between an inner medium pipe and an outer jacket, **characterised in that** the spacer element has one or more wings, that the length of each wing corresponds to the distance between pipe and jacket, that each wing has streamlined cross-section in parallel with the longitudinal axis of the medium pipe, and that the wings in the mounted condition are arranged largely perpendicular to the longitudinal axis of the medium pipe.

2. Spacer element according to claim 1, **characterised in that** each wing has lens-shaped, oval or prism-shaped cross-section.

3. Spacer element according to claim 1, **characterised in that** the element is rounded at one side and tapering at another side of the cross-section.

4. Spacer element according to one or more preceding claims, **characterised in that** the elements are fastened at one end to a member which may be fastened around the medium pipe.

5. Spacer element according to claim 4, **characterised in that** more spacer elements are arranged radially out from a member, where the member is capable of being arranged around the medium pipe.

6. Method for making insulated pipes, where spacer elements according to one or more of claims 1-5 are arranged around a medium pipe with suitable interspaces both radially around the pipe and in the longitudinal direction of the pipe; that a jacket is coaxially arranged around the outer side of the spacer elements; and that liquid foam material is placed within the jacket and brought to foaming.

7. Method according to claim 6, where the foam material has a cream time from 5 to 50 s and a fibre time from 10 to 130 s.

8. Method according to claim 6 or 7, where the foam material is a PUR, PIR or other foam material.

9. Method according to one or more of the preceding claims 6-8 where the foam material is placed within the jacket by inserting an injection lance in longitudinal direction of the pipe, the lance being withdrawn concurrently with foam material liquid being placed within the jacket.

10. Method where foam liquid and jacket are co-extruded together with the medium pipe around which pipe spacer elements according to one or more of the claims 1-5 are provided.

## Patentansprüche

1. Abstandshalterelement für die Verwendung beim Schäumen von Isolationsmaterial in Pipelines, wobei das Abstandshalterelement zwischen einem inneren Mediumrohr und einem äußeren Mantel angeordnet ist, **dadurch gekennzeichnet, dass** das Abstandshalterelement einen oder mehrere Flügel besitzt, dass die Länge jedes Flügels dem Abstand zwischen Rohr und Mantel entspricht, dass jeder Flügel parallel zur Längsachse des Mediumrohrs einen stromlinienförmigen Querschnitt hat und dass die Flügel im montierten Zustand im Wesentlichen senkrecht zur Längsachse des Mediumrohrs angeordnet sind.

2. Abstandshalterelement nach Anspruch 1, **dadurch gekennzeichnet, dass** jeder Flügel einen linsenförmigen, ovalen oder prismenförmigen Querschnitt hat.

3. Abstandshalterelement nach Anspruch 1, **dadurch gekennzeichnet, dass** das Element an einer Seite abgerundet ist und sich an einer weiteren Seite des Querschnitts verjüngt.

4. Abstandshalterelement nach einem oder mehreren der vorhergehenden Ansprüche, **dadurch gekennzeichnet, dass** die Elemente an einem Ende an einem Organ befestigt sind, das um das Mediumrohr befestigt werden kann.

5. Abstandshalterelement nach Anspruch 4, **dadurch gekennzeichnet, dass** mehrere Abstandshalterelemente radial außerhalb eines Organs angeordnet sind, wobei das Organ um das Mediumrohr angeordnet werden kann.

6. Verfahren zum Herstellen isolierter Rohre, bei dem Abstandshalterelemente nach einem oder mehreren der Ansprüche 1-5 um ein Mediumrohr mit geeigneten Zwischenräumen sowohl radial um das Rohr als auch in Längsrichtung des Rohrs angeordnet sind; wobei um die Außenseite der Abstandshalterelemente ein Mantel koaxial angeordnet ist; und wobei flüssiges Schaummaterial innerhalb des Mantels angeordnet und zum Schäumen gebracht wird.

7. Verfahren nach Anspruch 6, bei dem das Schaummaterial eine Aufrahmungszeit von 5 bis 50 s und eine Faserzeit von 10 bis 130 s hat.

8. Verfahren nach Anspruch 6 oder 7, bei dem das Schaummaterial ein PUR-, PIR- oder anderes Schaummaterial ist.

9. Verfahren nach einem oder mehreren der vorhergehenden Ansprüche 6-8, bei dem das Schaummaterial innerhalb des Mantels durch Einstecken einer Einspritzlanze in Längsrichtung des Rohrs angebracht wird, wobei die Lanze gleichzeitig mit dem Einbringen der Schaummaterial-Flüssigkeit in den Mantel herausgezogen wird.

10. Verfahren, bei dem Schaumflüssigkeit und Mantel gemeinsam mit dem Mediumrohr stranggepresst werden, wobei um das Mediumrohr Rohr-Abstandshalterelemente nach einem oder mehreren der Ansprüche 1-5 vorgesehen sind.

## Revendications

1. Elément d'espacement pour un usage dans l'expansion d'un matériau d'isolation dans des canalisations, l'élément d'espacement étant disposé entre une canalisation moyenne interne et une gaine externe, **caractérisé en ce que** l'élément d'espacement possède une ou plusieurs ailes, **en ce que** la longueur de chaque aile correspond à la distance entre la canalisation et la gaine, **en ce que** chaque aile a une section transversale profilée parallèle à l'axe longitudinal de la canalisation moyenne, et **en ce que** les ailes, lorsqu'elles sont montées, sont en grande partie disposées de manière perpendiculaire à l'axe longitudinal de la canalisation moyenne.

2. Elément d'espacement selon la revendication 1, **caractérisé en ce que** chaque aile a une section transversale en forme de lentille, ovale ou en forme de prisme.

3. Elément d'espacement selon la revendication 1, **caractérisé en ce que** l'élément est arrondi sur un côté et effilé sur un autre côté de la section transversale.

4. Elément d'espacement selon une ou plusieurs des revendications précédentes, **caractérisé en ce que** les éléments sont attachés au niveau d'une extrémité à un membre qui peut être attaché autour de la canalisation moyenne.

5. Elément d'espacement selon la revendication 4, **caractérisé en ce que** d'autres éléments d'espacement sont disposés radialement vers l'extérieur à partir d'un membre, le membre pouvant être disposé autour de la canalisation moyenne.

6. Procédé de fabrication de canalisations isolées, dans lequel des éléments d'espacement selon une ou plusieurs des revendications 1 à 5 sont disposés autour d'une canalisation moyenne espacés de manière appropriée tant radialement autour de la canalisation que dans la direction longitudinale de la canalisation ; une gaine est disposée de manière coaxiale autour du côté externe des éléments d'espacement ; et un matériau de mousse liquide est placé à l'intérieur de la gaine et est expansé.

7. Procédé selon la revendication 6, dans lequel le matériau de mousse a un temps de crème allant de 5 à 50 s et un temps de fibre allant de 10 à 130 s.

8. Procédé selon la revendication 6 ou 7, dans lequel le matériau de mousse est un PUR, un PIR ou tout autre matériau de mousse.

9. Procédé selon une ou plusieurs des revendications précédentes 6 à 8, dans lequel le matériau de mousse est placé à l'intérieur de la gaine par l'insertion d'une lance d'injection dans la direction longitudinale de la canalisation, la lance étant retirée à mesure que le matériau de mousse liquide est placé à l'intérieur de la gaine.

10. Procédé dans lequel la mousse liquide et la gaine sont co-extrudées conjointement avec la canalisation moyenne autour de laquelle sont disposés des éléments d'espacement de canalisation selon une ou plusieurs des revendications 1 à 5.
